# EUROPEAN PATENT APPLICATION

(11) **EP 4 650 830 A1**
(43) Date of publication of application: **19.11.2025**
(21) Application number: 24425017.1
(22) Date of filing: 16.05.2024
(51) Int. Cl.: G01T 1/20, G01T 1/167, G01T 1/163

(54) **MODULAR RADIATION DETECTOR**

(71) Applicant: ELSE NUCLEAR S.r.l., 20134 Milano (IT)
(72) Inventor: Manessi, Giacomo Paolo, 27100 Pavia (IT); Ballerini, Marcello Fabio, 20005 Pogliano Milanese (MI) (IT); Ferrante Vero, Luca Fabiano, 56127 Pisa (IT); Zorloni, Gabriele, 20131 Milano (IT)
(74) Representative: Tarabbia, Luigi

(57) **Abstract**

Modular radiation detector (1), for performing a radiation detection on a subject, comprising a plurality of interchangeable detection modules (2), in use connectable to each other to perform an energy and/or information exchange, wherein at least one subset of the detection modules (2) are configured, in a use configuration, to be reversibly assembled so as to define at least one substantially vertically extending self-supporting structure (S).

## Description

The present invention relates to a modular radiation detector.

In detail, the present invention relates to a modular radiation detector configured to be portable and usable for checking the contamination risk of personnel employed in environments with a risk of radioactive contamination.

In other words, the present invention falls in the field of radiation detection devices.

The detector is designed to quickly and accurately scan an individual through a two- or multi-step measurement procedure so as to detect possible radioactive contamination due to exposure to ionising radiation.

The present invention is easily transportable and deployable, provided with robust and reliable hardware, and providing accurate measurement performance suitable for use in locations considered hazardous from the perspective of radiation release, such as nuclear power plants or locations subject to unintentional ionising radiation contamination.

In the state of the art, different embodiments of radiation detectors can be found. However, such detectors generally have multiple drawbacks.

The first drawback is that such detectors are made fixed or, in other words, immovable with respect to the work area, typically installed at the boundaries of radiation-controlled areas to prevent the spread of radioactive contamination outside such areas.

The detectors currently known in the state of the art are characterised by a heavy and bulky structure, which completely surrounds the body of the personnel to be monitored, provided with many small sensors and/or radiation detecting elements arranged in a shape which surrounds the entire body.

The typical overall dimensions of such detectors are approximately 240-300 cm high, 100-160 cm wide and 80-120 cm deep. The total weight easily exceeds 500 kg, due to the heavy structure generally made of metal, as well as the lead layers used to reduce the ambient radiation background in the measuring position.

Therefore, such detectors cannot be easily installed, uninstalled or moved, nor can they be easily used in remote and hard-to-reach locations.

In particular, such detectors are installed so as to substantially be a single block, having numerous elements which are fixed irreversibly or by fastening means, such as threaded members, which require a great deal of time during the assembly of the detector itself.

A further disadvantage is that such detectors are characterised by a very complex mechanical, electrical and electronic architecture, also comprising a small level of automation.

In some detector models, the number of sensors used can be up to a hundred. Such detectors also further comprise any movable detector elements, either installed on hand-held elements which are removable in relation to the main structure or installed on movable arms attached to the main structure and used to be approached to specific body areas, such as the arms or legs, to maximise detection efficiency.

Such a feature makes the measurement process even more complicated, especially for occasional users, who must often be guided by supervisors or specialised technical personnel to follow all the steps required by the measurement procedures.

The general complexity of such detectors also leads to an increase in the number of malfunction states as well as the time required for preventive maintenance operations, which become very complex due to the number of cables, boards and interconnections required to operate such a large detector array.

Furthermore, all the detectors used are very fragile, especially the 'mylar foil' window part, which must be replaced very frequently, even several times a month, depending on the daily number of operators passing through the device.

Finally, a further disadvantage of the detectors presently on the market is that it is difficult for a being subjected to detection to carry out such a detection independently.

In particular, the detectors presently known in the state of the art require the subject to stand in specific positions and stay still in order to perform a correct detection. This forces the operator to interrupt the measurement if it is necessary to check some messages and/or activate some virtual buttons.

In other words, the detectors present in the state of the art require the presence of a further subject to perform the detection and give the commands to the detector while a first subject is subjected to the detection.

In this context, the technical task underlying the present invention is to propose a radiation detector which overcomes at least some of the drawbacks of the prior art mentioned above.

In particular, it is the aim of the present invention to provide a radiation detector which can be easily installed, uninstalled and transported.

A further aim of the present invention is to provide a radiation detector which can be transported and used in remote and hard-to-reach places, such a detector being made in a robust and shock-resistant manner.

A further aim of the present invention is to provide a radiation detector which is easily and flexibly adaptable to carry out complete or even partial body detections of a human subject.

A further aim of the present invention is to provide a modular radiation detector which is simple to use and can be operated independently by a single operator intent on performing a detection of the presence of radiation on himself/herself.

The defined technical task and the specified aims are substantially achieved by a modular radiation detector comprising the technical features set forth in one or more of the appended claims.

The dependent claims correspond to possible embodiments of the invention.

In particular, the modular radiation detector is designed to perform a radiation detection on a subject.

The modular radiation detector comprises a plurality of interchangeable detection modules, which can be connected to each other for energy and/or information exchange in use.

Each detection module of such a plurality of detection modules comprises an outer casing and at least one sensor element arranged inside the outer casing.

In particular, each detection module comprises a detection portion at which the sensor elements perform such a detection.

The modular radiation detector envisages that at least one subset of detection modules of such a plurality of detection modules is configured, in a use configuration, to be reversibly assembled so as to define at least one self-supporting structure with substantially vertical extension with respect to a support plane of the radiation detector, such a self-supporting structure defining a radiation detection array for the radiation detector.

Advantageously, the modular radiation detector is made modular by of several detection modules, which can be transported individually to then be assembled into at least one vertical self-supporting structure, in which such detection modules together act as a single detection array adapted to perform a detection of the presence of radiation on a subject.

Preferably, the detection modules of such a plurality of detection modules are identical to each other.

Advantageously, such a feature allows an easy assembly and a fast replacement of the detection modules if one or more detection modules is subject to wear or failure.

Preferably, each outer casing of a detection module comprises a first connection facade and a second connection facade, which are opposite each other and in which the detection portion is defined between such first and second connection facades. The first and second connection facades are configured to make a reversible connection between a detection module and at least one further detection module.

Even more preferably, the first connection facade of a detection module of such a subset of detection modules defining such a self-supporting structure is supported on the second connection facade of a further detection module defining such a self-supporting structure.

Advantageously, such a self-supporting structure does not require any further structural elements to be interposed between two or more detection modules constituting such a self-supporting structure.

Preferably, each detection module comprises at least one female structural connector and at least one male structural connector, arranged on such first and said second connection facades, respectively, in which at least one male connector of a first detection module is mutually insertable and reversibly interlockable with a corresponding female structural connector of a second detection module.

Even more preferably, such a female structural connector and such a male structural connector extend correspondingly orthogonally with respect to such a first connection facade and such a second connection facade.

Advantageously, such a feature allows an easy reversible structural connection between a detection module and a further detection module, allowing such detection modules to be mutually connected in a more stable manner and more resistant to external stress.

Preferably, the male structural connector corresponds to a projection emerging orthogonally with respect to the second connection facade and having along such a connection facade an elongated profile oriented transversely with respect to the detection portion, and the female structural connector corresponds to a loculus extending orthogonally with respect to the first connection facade compatible in shape with such a projection.

Advantageously, such a feature allows an easy reversible mechanical connection between a detection module and a further detection module which can be engaged by vertical overlapping.

Even more preferably, each detection module further comprises at first side ends of the first connection facade respectively at least one pair of fastening seats arranged opposite each other, and at the second side ends of the second connection facade a pair of 'L'-shaped, press-in fastening arms which can be clamped by means of a butterfly fastener, arranged opposite each other.

Each press-in fastening arm of a detection module is configured to couple with the fastening seat of a further detection module and exert a clamping action with respect to the fastening seat, holding the first connection facade of a detection module fastened in adhesion with respect to a second connection facade of a further module.

Advantageously, such a feature allows a detection module to be reversibly locked and retained with respect to a further detection module, respectively, when structurally connected and participating in defining such a self-supporting structure.

Preferably, the first connection facade and the second connection facade comprise respective electronic connectors configured to achieve an energy and/or information communication between respective detection modules.

Even more preferably, each detection module comprises at least one male electronic and at least one female electronic connector, respectively arranged on such first and second connection facades, in which at least one male connector of a first detection module is mutually insertable and reversibly interlockable with a corresponding female structural connector of a second detection module.

Even more preferably, such an electronic male connector and such an electronic female connector extend correspondingly orthogonally with respect to such a first connection facade and such a second connection facade.

Advantageously, such a feature allows an easy reversible electronic connection between a detection module and a further detection module which can be engaged by vertical overlapping.

Preferably, the structural connectors and the fastening means are integrated in corner reinforcements arranged at the ends of a detection module.

Advantageously, the corner reinforcements are configured to support and transmit the weight of each detection module so as not to mechanically stress the most sensitive portions, such as the detection portion of a detection module.

Preferably, each detection module comprises electronic connectors of military or MIL circular type.

Advantageously, such a type of connection is extremely effective when used in environments subject to changing climatic conditions or in the presence of background radiation which can alter data transmission.

Preferably each detection module comprises Ethernet or ETH type electronic connectors.

Advantageously, such a type of connection allows quick access to run diagnostic operations on the electronic and software conditions of each detection module as well as on the detection module itself.

Preferably, each sensor element consists of scintillation detectors extending along the same extension area of the detection portion.

Even more preferably, the sensor element comprises a plastic slab with high sensitivity to alpha, beta and gamma particles coupled with magnetic proximity or PMT sensors.

Preferably, the outer casing has an opening defining the detection portion and in which the sensor elements face such an opening and are configured to perform the detection through such an opening.

Preferably, each sensor element comprises a detection surface having substantially the same size as such an opening.

Advantageously, such an arrangement allows to minimise the attenuation of gamma rays and thus improves the overall detection efficiency of the radiation detector.

Preferably, each detection module comprises a protection grid arranged or mounted to cover such an opening, in which the sensor elements being arranged near the protection grid.

Advantageously, the presence of the grid protects the opening and thus the exposed sensor element.

Preferably, each detection module comprises a protection cover available to cover at least such an opening.

Advantageously, the presence of the cover allows to provide further protection covering at least such a detection portion, in particular of such an opening, and the sensor element, in particular, when the detection modules are separated and subject to being moved.

Preferably, each outer casing of a detection module substantially has a parallelepiped shape.

Even more preferably, each outer casing has a detection portion substantially coinciding with a parallelepiped-shaped facade of the outer casing.

Advantageously, such a constitution of the detection module allows to maximise the exposure surface area of the sensor element, successfully maximising the detection capacity of each single detection module.

Preferably, the self-supporting structure is defined by detection modules having detection portions of the sensor elements oriented towards the same main detection space.

Even more preferably, the self-supporting structure comprises detection modules having detection portions which are planar, aligned and arranged substantially parallel to each other.

Advantageously, such an arrangement allows a subset of detection modules forming such a self-supporting structure to have a single detection array comprising a surface with few discontinuities in terms of radiation detection.

Even more preferably, the self-supporting structure comprises detection modules having planar detection portions substantially parallel to such a vertical extension of such a self-supporting structure.

Advantageously, such an arrangement allows a subset of detection modules forming such a self-supporting structure to perform an essentially horizontal detection with respect to a subject, in which the radiation detector performs such a detection along the entire body of the subject himself/herself.

Preferably, at least one detection module of such a plurality of detection modules in use can be configured to define a detection base, in which a first portion of the detection module defines at least part of the support plane of the radiation detector and a second portion, opposite the first portion, defines the detection portion.

Even more preferably, the detection portion of the detection module defining the detection base is oriented perpendicular to the detection portion of at least one participating detection module forming the self-supporting structure.

Advantageously, exploiting a detection module as a detection base also allows to perform a detection of the main detection space in a transverse manner from below, allowing a more complete detection with respect to a detection performed exclusively by detection modules assembled in the vertical self-supporting structure.

Preferably, the modular radiation detector comprises a support platform, provided with at least one walkable surface, in use overlapping with respect to the detection base.

Advantageously, the walkable surface allows to avoid transmitting excessive unwanted mechanical stresses to the underlying detection module, viz., defining the detection base.

Preferably, each detection module of the plurality of detection modules comprises gripping means which in use can be grasped by a user, the gripping means preferably being made in the form of folding handles arranged on the outer casing.

Advantageously, the presence of the gripping means allows an easy handling and transport of the individual detection modules.

Preferably the modular radiation detector comprising a control unit configured to control each detection module of the plurality of detection modules.

Even more preferably, the control unit is made in the form of a user interface unit which is reversibly connected with at least one respective detection module so that it is put in communication with each detection module of the plurality of detection modules.

Preferably, the interface unit comprises a voice-activated interface configured to manage and emit voice messages with the subject to be scanned.

Even more preferably, the user interface unit corresponds to a portable computer or a tablet which can be reversibly electronically and structurally connected to a detection module defining in use such a self-supporting structure, such an interface unit being configured to transmit visual or acoustic messages.

Advantageously, such a type of interface unit allows to receive and transmit multi-sensory messages, including visual, acoustic and voice, allowing an overall management of the detection process of the radiation detector by the detection subject himself/herself also without requiring

Preferably, the modular radiation detector comprising an electrical power supply unit reversibly connectable at least electrically to one of such a plurality of detection modules, acting as an electrical supply intermediation element for such a radiation detector, comprising at least one electronic connector supplying at least one electrical current in input to such a power supply unit and at least one electronic connector supplying at least one electrical current in output to a detection module.

Preferably, the electrical power supply unit comprises at least one MIL-type electronic connector.

Preferably, the power supply unit comprises at least one ETH-type connector.

Advantageously, the use of an autonomous power supply unit allows the radiation detector to be optimally powered by an electrical power source, protecting the current flow from external interference, such as when such a radiation detector is used in the presence of radioactive risk areas.

Preferably, the detection module defining the detection base has an energy and/or information exchange connection with at least one detection module of such a subset of detection modules defining the self-supporting structure by means of an appropriate flexible connection element.

Advantageously, the flexible connection element allows detection modules which are oriented differently in space to be connected together.

Preferably, the radiation detector includes at least one among detection sensors of presence of a subject of such detection, such sensors preferably being weight sensors and/or proximity sensors.

Advantageously, the radiation detector can be configured to activate the radiation detection by means of the detection of the presence of the subject by means of the weight sensor and/or the presence of the subject himself/herself.

Preferably, the radiation detector includes at least one transport module made internally hollow and defining a containment volume for accessory elements and/or tools for the installation or maintenance of the radiation detector.

Advantageously, the transport module allows to have the accessory elements or tools useful for the installation and proper operation of the radiation detector available if the radiation detector is used outdoors and/or in remote locations.

Preferably, the detection modules are available in a storage configuration, in which the detection modules are arranged or mutually available in an overlapping manner, in which a corresponding first portion of a detection module is in contact with the second portion of a further detection module. Preferably, the transport module is available in such a storage configuration, in which the first portion of a transport module is in contact with the second portion of a detection module.

Advantageously, the mutually overlapping storage configuration allows an easier storage as well as overall handling of all the detection and transport modules.

Preferably, even in a storage configuration, the detection modules are supported by corner reinforcements so as to absorb and transfer the weight of each detection module and not mechanically stress the most sensitive portions of a detection module, in particular the detection portion of a detection module.

Further features and advantages of the present invention will become more apparent from the approximate and thus non-limiting description of a preferred, but not exclusive, embodiment of a modular radiation detector, as shown in the accompanying drawings, in which:

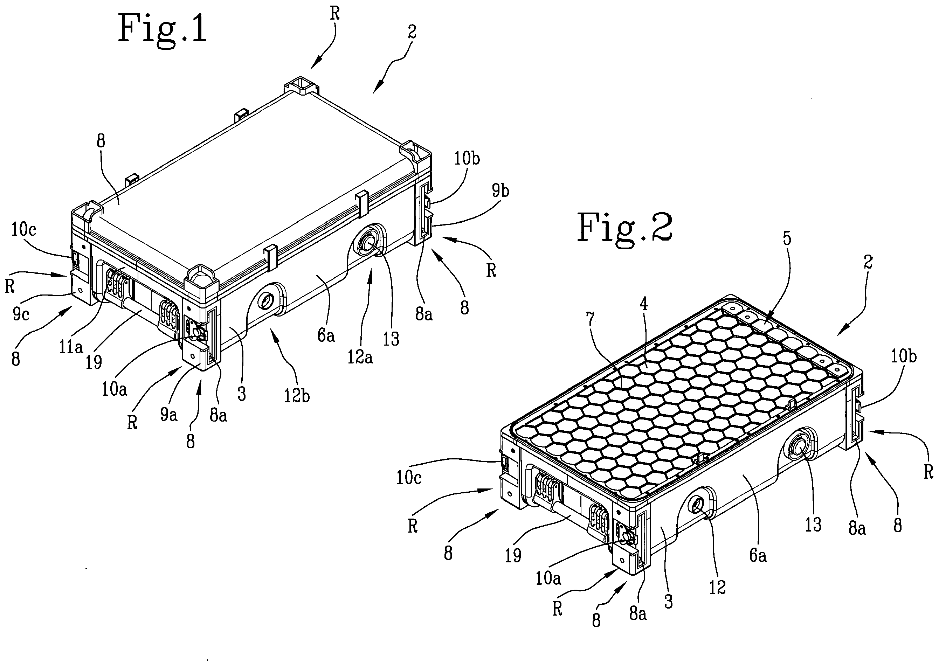

- figure 1 shows a detection module;
- figure 2 shows a detection module without a cover and having the detection portion exposed;

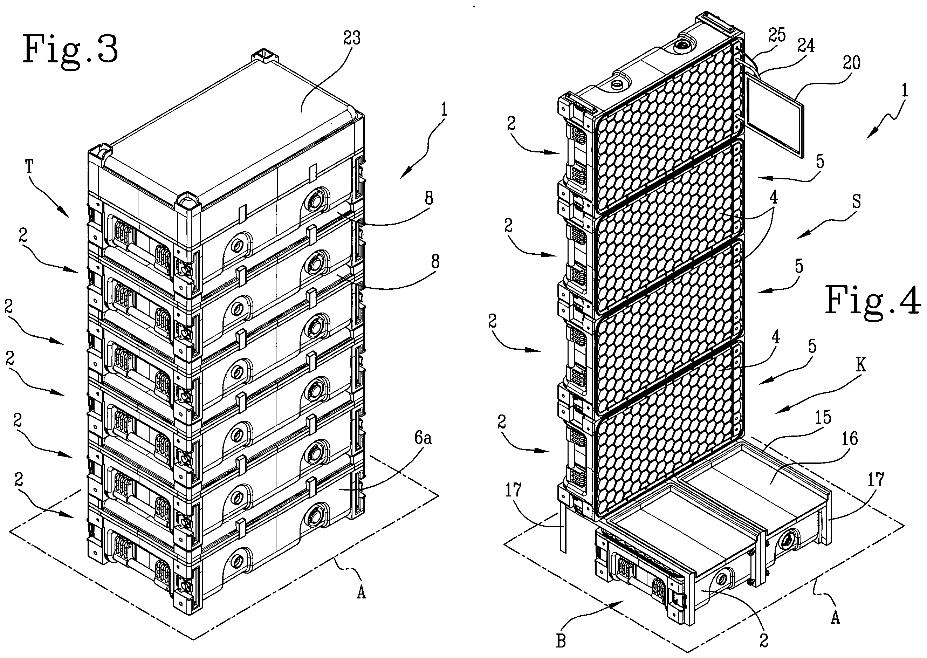

- figure 3 shows a plurality of detection modules and a transporter module arranged in an overlapping manner, viz., in a storage configuration;
- figure 4 shows the modular radiation detector in the use configuration in which a subset of detection modules are assembled to form a vertical self-supporting structure and a further detection module defines a detection base provided with a supporting platform;

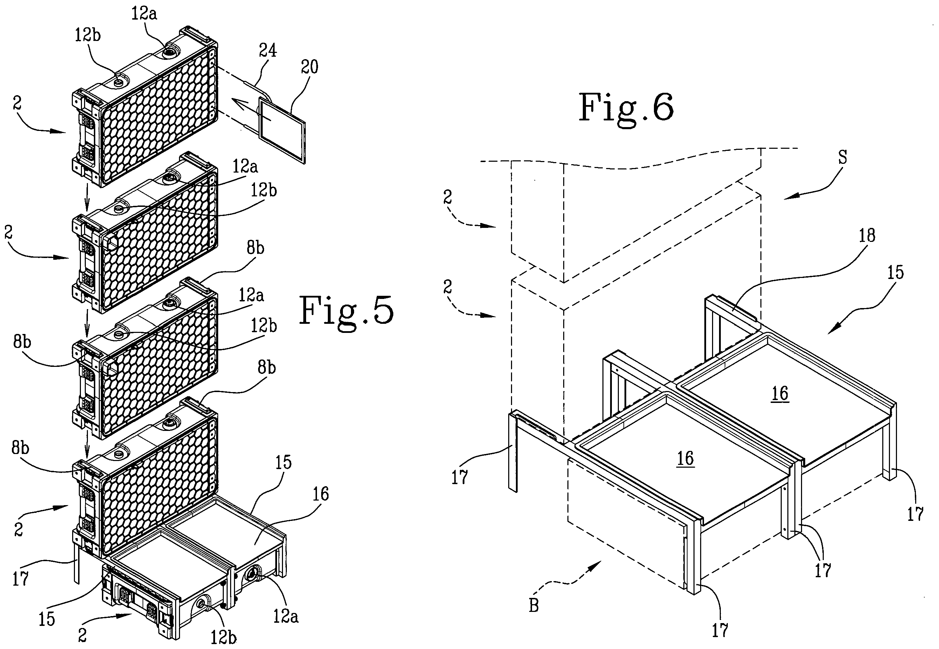

- figure 5 shows an exploded view of the modular radiation detector illustrated in figure 3;
- figure 6 shows a detail of the support platform illustrated in figures 4 and 5;

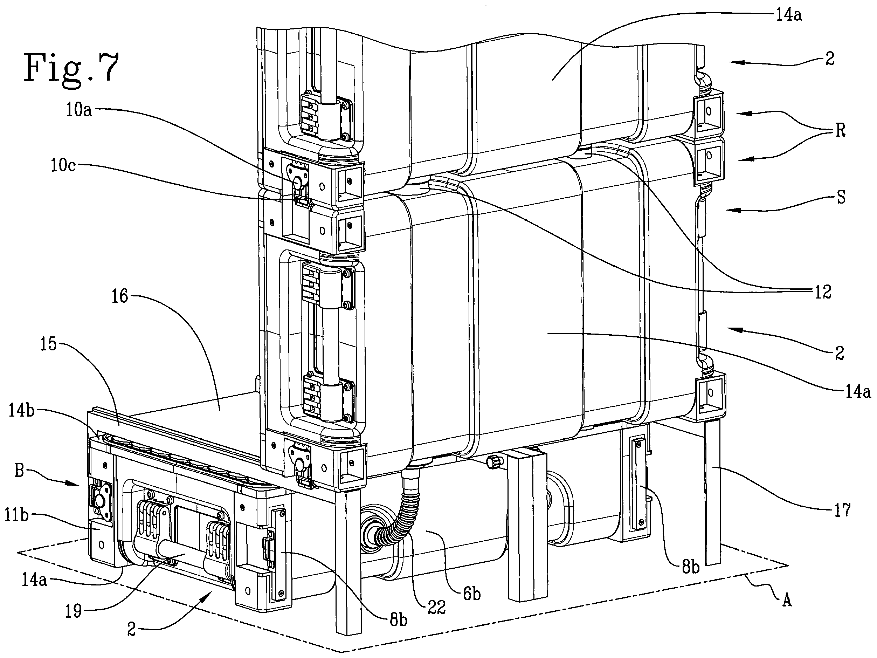

- figure 7 shows a partial view of the back of the radiation detector in the operating configuration illustrated in figure 3;

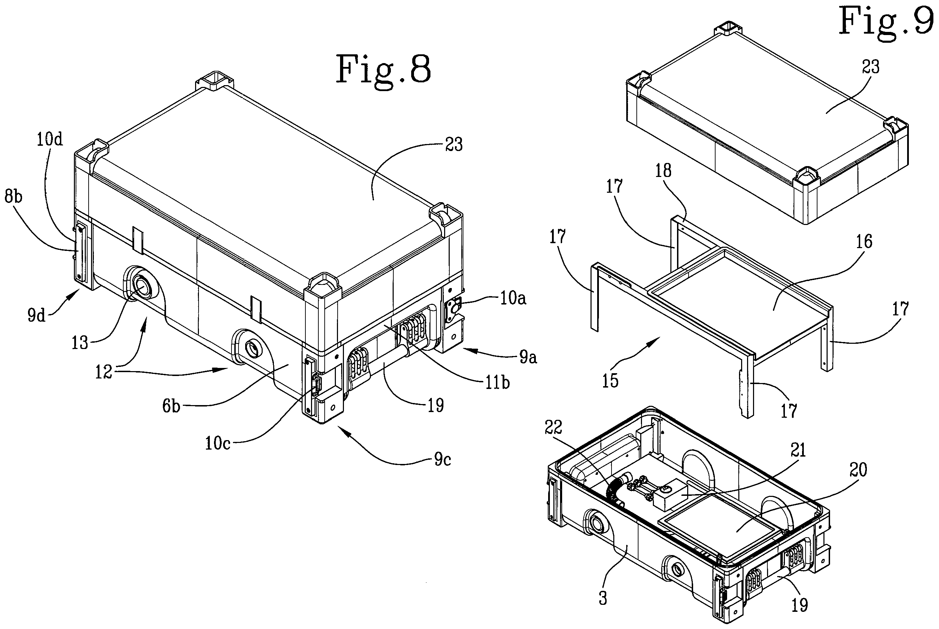

- figure 8 shows a transport module;
- figure 9 illustrates an exploded view of the transport module illustrated in figure 5.

The modular radiation detector according to the present invention is designed to quickly and accurately scan an individual through a two- or multi-step measurement process so as to detect possible radioactive contamination due to exposure to ionising radiation.

The present invention is easily transportable and deployable, provided with robust and reliable hardware, and providing accurate measurement performance suitable for use in locations considered hazardous from the perspective of radiation release, such as nuclear power plants or locations subject to unintentional radiation contamination.

Radiation detection means that the radiation detector is designed to quickly detect the presence of radioactive particles, in particular, alpha, beta and gamma particles.

In the attached figures, a modular radiation detector designed to perform a radiation detection on a subject is generically indicated with the reference numeral 1.

The modular radiation detector 1 comprises a plurality of interchangeable detection modules 2, which can be connected to each other for energy and/or information exchange in use.

Preferably, the detection modules 2 of such a plurality are identical to each other.

Each detection module 2 of such a plurality comprises an outer casing 3 and at least one sensor element 4 arranged inside the outer casing 3.

In particular, each detection module 2 comprises a detection portion 5 at the which sensor elements 4 perform such a detection.

The modular radiation detector 1 envisages that at least one subset of detection modules 2 of such a plurality of detection modules 2 configured, in a use configuration, to be reversibly assembled so as to define at least one self-supporting structure 'S' with substantially vertical extension with respect to a support plane 'A' of the radiation detector 1; said self-supporting structure 'S' defining a radiation detection array for the radiation detector 1.

Support plane 'A' is intended as a plane defined by a series of support points belonging to the radiation detector 1 through which the radiation detector 1 itself unloads its weight onto a preferably horizontal surface of an environment such as a floor or ground.

Detection array means that the subset of detection modules '2' act in a coordinated manner to simultaneously perform such a radiation detection on the subject.

Each outer casing 3 is configured to be resistant to shocks and adverse environmental conditions. The outer surface of each outer casing 3 is preferably made of lightweight but strong materials, preferably comprising metals and/or polymers, with sections with curved extension to improve resistance to external mechanical stresses.

Each outer casing 3 of a detection module 2 comprises a first connection facade 6a and a second connection facade 6b, which are opposite each other and in which the detection portion 5 is defined between such first and second connection facades 6a, 6b. The first and second connection facades 6a, 6b are configured to make a reversible connection between a detection module 2 and at least one further detection module 2.

The detection portion 5 is arranged transversely with respect to such a first and second connection facade 6a, 6b.

Preferably, such a plurality of detection modules 2 are identical to each other so that all the detection modules 2 can be connected in any possible combination without any constraints.

In a use configuration, in which a subset is assembled to form at least one such self-supporting structure 'S', the detection modules 2 of such a subset are arranged overlapping each other vertically, in which the first connection facade 6a of a detection module 2 rests on the second connection facade 6b of a further detection module 2.

In other words, the self-supporting structure 'S' will have a support plane 'A' defined at least partially by a detection module 2 supported along one such first or second connection facades 6a, 6b, e.g., on a floor or ground preferably substantially horizontal, and further detection modules 2 arranged mutually connected, arranged in an overlapping manner with each other.

In other words, such a self-supporting structure 'S' extends transversely with respect to such a support plane 'A', preferably perpendicularly, self-supporting itself against the force of gravity.

In alternative embodiments not illustrated, a radiation detector 1 can have multiple dedicated self-supporting structures 'S' dedicated to defining a single detection array for multilateral scans of a same subject or multiple detection arrays configured to perform simultaneous scans of a plurality of subjects.

Preferably, each sensor element 4 consists of scintillation detectors extending along the same extension area of the detection portion 5.

Even more preferably, the sensor element 4 comprises a single slab of material comprising scintillation crystals with high sensitivity to alpha, beta and gamma radiation coupled to a magnetic proximity or PMT sensor, in which the slab of scintillation material converts radiation-stressed photons into photons. The PMT sensor converts such photons into electrical signals after polarising the light by means of a high-voltage (HV) generator. Both the PMT and HV electronics of the sensor element 4 are very compact and integrated inside the detection module 2, ensuring a high degree of vibration and shock resistance.

Even more preferably, the sensor element 4 has an activity detection parameter or MDA of 66 Bq or 3960 dpm (reference isotope Co-60, reference background environmental dose equivalent rate - rate H*(10) - 200 nSv/h or 0.020 mrem/h) for a 60 s measurement on each side of a subject's body.

According to the embodiment illustrated in the present figures, the outer casing 3 has an opening defining the detection portion 5 and the sensor element 4 faces from such an opening and is configured to perform the detection through the same opening. Alternatively, with particular reference to the present figures, the sensor element 4 is at least partially integrated in the opening itself.

In particular, each sensor element 4 comprises a detection surface substantially having the same dimensions as such an opening.

Preferably, each detection module 2 comprises a protection grid 7 arranged or mounted to cover such an opening, in which the sensor element being arranged near the protection grid 7.

Preferably, each detection module 2 comprises a protection cover 8 available to cover at least the sensor element 4, in particular such an opening comprises the sensor element 4.

At the detector assembly, the protection covers 8 of each detection module 2 are removed, to provide greater exposure of the subject on which to perform the detection towards the sensitive parts of the sensor elements 4.

According to the embodiment illustrated in the present figures, each outer casing 3 of a detection module 2 is substantially parallelepiped in shape and has a detection portion 5 substantially coinciding with a facade of the outer casing 3.

Similarly, the first and second connection facades 6a, 6b correspond to further facades of the parallelepiped arranged opposite each other, as does the facade of the detection portion 5 which shares a respective edge with such first and second connection facades 6a, 6b.

Preferably, the first and second connection facades 6a, 6b are parallel to each other and perpendicular with respect to the facade comprising the detection portion 5.

Alternative embodiments not illustrated can envisage different inclinations between the first connection facade 6a, the second connection facade 6b and the facade comprising the detection portion 5.

According to the embodiment illustrated in the present figures, the first connection facade 6a and such second connection facade 6b comprise respective structural connectors 8 configured to make a reversible interlocking connection between respective detection modules 2. In particular, a detection module 2 makes such an interlocking connection with respect to a further detection module 2 when participating in defining such a self-supporting structure 'S'.

In particular, each detection module 2 comprises at least one female structural connector 8a and at least one male structural connector 8b, respectively arranged on the first connection facade 6a and the second connection facade 6b, in which at least one male structural connector 8b of a detection module 2 is mutually insertable and reversibly interlockable to a corresponding female structural connector 8a of a further detection module 2.

Even more preferably, such a female structural connector 8a and such a male structural connector 8b extend correspondingly orthogonally with respect to such a first connection facade 6a and such a second connection facade 6b.

According to the embodiment illustrated in the present figures, the male structural connector 8b corresponds to a projection emerging orthogonally with respect to the second connection facade 6b and having along such a second connection facade 6b an elongated profile oriented transversely with respect to the detection portion 5 and the female structural connector 8a corresponds to a loculus extending orthogonally with respect to the second connection facade 6a, compatible in shape with the male structural connector 8b.

Preferably, each detection module 2 comprises fastening means configured to immovably fasten a detection module 2 with respect to a further detection module 2.

Each detection module further comprises at first side ends 9a, 9b of the first connection facade 6a respectively at least one pair of fastening seats 10a, 10b, arranged opposite each other, and at the second side ends 9c, 9d of the second connection facade 6b a pair of press-in fastening arms 10c, 10d, shaped like an 'L' and lockable by means of a butterfly fastener, arranged opposite each other.

Each press-in fastening arm 10c, 10d of a detection module 2 is configured to couple with the fastening seat 10a, 10b of a further detection module 2 and exert a clamping action with respect to the fastening seat 10a, 10b, holding the first connection facade 6a of a detection module 2 fastened in adhesion with respect to a second connection facade 6b of a further detection module 2.

In the embodiment illustrated in the present figures, the detection module 2 has a parallelepiped shape.

Each detection module 2 comprises a first side facade 11a and a second side facade 11b, arranged opposite and transverse to each other, preferably perpendicular, with respect to the first connection facade 6a, the second connection facade 6b and the facade comprising the detection portion 5, sharing a corresponding edge therewith.

Preferably, such at least one pair of fastening seats 8a are arranged on the first and second side facades 11a, 11b respectively at the edge with the first and second connection facades 6a, 6b, such edges correspondingly coinciding with the first side ends 9a, 9b and the second side ends 9c, 9d.

According to the embodiment illustrated in the present figures, preferably both the structural connectors 8 and the fastening means 10a,10b, 10c, 10d are integrated in corner reinforcements 'R' arranged at the ends of a detection module 2.

Preferably, such corner reinforcements 'R' are arranged at the meeting between the first and second connection facades 6a, 6b and the first and second side facades 11a, 11b.

The first connection facade 6a and the second connection facade 6b further comprise respective electronic connectors 12 configured to achieve an energy and/or information communication between respective detection modules 2.

Preferably, each detection module 2 comprises at least one male and at least one female electronic connector, arranged on the first connection facade 6a and second connection facade 6b, respectively, in which at least one male connector of a first detection module 2 is mutually insertable and reversibly interlockable with a corresponding female structural connector of a second detection module 2.

Even more preferably, such an electronic male connector and such an electronic female connector extend correspondingly orthogonally with respect to such a first connection facade 6a and such a second connection facade 6b.

Preferably the electronic connectors 12 are MIL standard military circular connectors.

In the embodiment illustrated in the present figures, such electronic connectors 12 are shaped into corresponding housings having a cylindrical protuberance therearound.

Preferably, each between the first connection facade 6a and the second connection facade 6b comprises at least one pair of such protuberances in which at least a first protuberance 12a corresponds to an electronic connector, male or female. A second protuberance 12b can correspond to an electronic connector, male or female, or, alternatively, it can correspond to a dummy connector, viz., which does not allow an electrical or information connection.

Each electronic connector preferably comprises a cover cap 13 for safeguarding the electronic connector 12 itself during transport or storage. In the operating configuration, the cap 13 can be arranged on the protuberance 12b of the dummy connector, allowing the cap 13 not to be lost while simultaneously allowing the first protuberance 12a of the actual male electronic connector of a detection module 2 to be operatively coupled or couplable to make an electronic connection with an actual female electronic connector of a further detection module 2.

Additionally, each detection module 2 comprises Ethernet ETH type electronic connectors.

Preferably, each detection module has an Ethernet port, such a port being used for service activities such as maintenance, diagnostics, testing, etc., to be performed by authorised personnel preferably through an external device.

Preferably, the connection to the ETH service automatically disables the radiation detector 1 for performing the necessary diagnostic or maintenance operations.

The self-supporting structure 'S' is defined by detection modules 2 having detection portions of sensor elements 4 oriented towards the same main detection space 'K'.

According to the embodiment illustrated in the present figures, the self-supporting structure 'S' envisages detection modules 2 having planar detection portions 5; such detection portions 5 being aligned and arranged substantially parallel to each other.

Preferably, at least one detection module 2 of the plurality of detection modules 2 in use is configured to define a detection base 'B', wherein a first portion 14a of the detection module 2 defines at least part of the support plane 'A' of the radiation detector 1 and a second portion 14b, opposed to the first portion 14a, defines that portion of the detection base 5.

According to the form of realisation illustrated in the present figures, in which a detection module 2 has a parallelepiped shape, the first portion 14a and the second portion 14b correspond to functional facades of the detection module 2 arranged opposite each other.

In other words, if we define the facade comprising the second portion 14b, corresponding to the detection portion 5, as the 'front facade', the facade comprising or corresponding to the first portion 14a results as the 'rear facade', which share edges with the first and second connection facades 6a, 6b and with the first and second side facades 11a, 11b respectively.

In alternative embodiments not illustrated in the present figures, different geometries with respect to those specified above can be envisaged.

In other words, the detection portion 5 of the detection module 2 defining the detection base 'B' is oriented transverse, preferably perpendicular, with respect to the detection portion 5 of at least one further detection module 2 participating in defining the self-supporting structure 'S'.

Preferably, the detection modules 2 of such a plurality of detection modules 2 are available in a mutually overlapping manner in a transport configuration, in which a corresponding first portion 14a of a detection module 2 is in contact with the second portion 14b of a further detection module 2.

Preferably, in the transport configuration, the second portion 14b of each detection module 2 is provided with a cover 8.

Preferably, the modular radiation detector 1 comprises a support platform 15, provided with at least one walkable surface 16, in use overlapping with respect to the detection base 'B'.

The walkable surface 16 is configured to restingly support an operator in an upright position.

Overall, the radiation detector 1 is configured to support a maximum payload of 150 kg/331 lbs.

Preferably, the support platform 15 provides a plurality of feet 17 configured to support such a walkable surface 16 in an elevated manner with respect to a floor or ground, such a plurality of feet 17 preferably being at least four.

In other words, the feet 17 have a length compatible with an arrangement of the detection base 'B' between the floor or ground and the walkable surface 16.

Preferably, the support base 15 further comprises a support area 18, configured to restingly accommodate such a self-supporting structure 'S'. Preferably both the support area 18 and the walkable surface 16 are arranged aligned at the same height.

According to the present embodiment, the radiation detector 1 comprises two support platforms 15, available in use adjacent to each other to support a self-supporting structure 'S'.

Preferably, each detection module 2 of such a plurality of detection modules 2 comprises gripping means 19 which in use can be grasped by a user, the gripping means 19 preferably being made in the form of folding handles arranged on the outer casing 3.

The modular radiation detector 1 comprising a control unit 20 configured to control each detection module 2 of such a plurality of detection modules 2. Preferably, the control unit is made in the form of a user interface unit which is reversibly connected, structurally and electronically, with at least one respective detection module 2 so that it is put in communication with each detection module 2 of such a plurality of detection modules 2.

Preferably, the control unit 20 corresponds to a portable computer which can be reversibly connected to one among such a plurality of detection modules 2.

Preferably, the control unit 20 comprises a voice-activated interface configured to manage and emit voice messages with the subject to be scanned.

Preferably, the control unit 20 comprises a touch-screen type interface unit.

Preferably, the modular radiation detector 1 comprising an electrical power supply unit 21 reversibly connectable to one among such a plurality of detection modules 2.

The electrical power supply unit 21 acts as a converter of electrical energy, having in input a conventional power supply cable, e.g., connectable to a 220V socket, and in output at least one electronic male connector and/or one electronic female connector connectable to one or more detection modules 2, preferably of the MIL type.

Preferably, the radiation detector 1 comprises at least one presence sensor of a subject to be subjected to such a detection, such a presence sensor being at least one among a weight sensor and a proximity sensor. Preferably such weight sensors are arranged at or integrated with such a support platform 15, even more preferably with the walkable surface 16. Preferably, the radiation detector 1 comprises a flexible connection element 22, in which the detection module 2 defining the detection base 'B' has an energy and/or information exchange connection with at least one among the subset of detection modules 2 defining the self-supporting structure 'S'.

The flexible connection element 22 is flexibly bent or bendable to electronically connect the detection module 2 defining such a detection base 'B' and a detection module 2 of such a participating subset to define the self-supporting structure 'S', oriented transversely to each other.

Preferably, the radiation detector 1 comprises an internally hollow transport module 'T' and defining a containment volume for accessory elements and/or tools for the installation or maintenance of the radiation detector 1.

In particular, the transport module 'T' substantially corresponds to a dummy detection module, viz., comprising an empty outer casing 3, viz., lacking a sensor element 4.

Such accessory elements correspond to one or more support platforms 15, the control unit 20, the autonomous power supply unit 21, the flexible connection element 22, various tools, etc.

The transport module 'T' further comprises an expanded cover 23, shaped so as to increase the containment volume of the transport module 'T' itself. Similarly, the transport module 'T' also comprises gripping means 19 which in use can be grasped by a user, preferably made in the form of folding handles arranged on the outer casing 3.

The transport module 'T' is also available in a mutually overlapping manner in a transport configuration to the detection modules 2.

The transport module is arranged on top of the plurality of overlapping detection modules 2, in which the corresponding first portion 14a of the transport module 'T' is in contact with the second portion 14b of a detection module 2.

Preferably, in the transport configuration, the second portion 14b of the transport module 'T' is provided with an expanded cover 23.

According to the embodiment illustrated in the present figures, the device comprises six modules: five detection modules 2 and one transport module 'T'.

Four detection modules 2 are used to define the self-supporting structure 'S' and one detection module 2 defining the detection base 'B'.

The subject of the detection activates the detection, preferably by means of the weight sensor and/or proximity sensor by stepping on the walkable surface 16. Alternatively, the subject interacts with the control unit 20 by pronouncing voice commands and/or by means of manual commands.

The control unit is preferably a tablet which is connectable or connected to any one among such four detection modules 2 defining the self-supporting structure 'S' by means of a mechanical support 24, preferably of the 'easy-click' type, and a connection cable 25.

Preferably, the mechanical support 24 is of the hinge type, configured to at least move the control unit 20 in rotation with respect to the self-supporting structure 'S'.

The connection of the control unit 20 to a specific detection module 2 corresponds to an automatic selection of the processing unit of the detection module 2 as the 'master' detection module, and the remaining control detection modules 2 correspond to 'slave' detection modules, viz., which will follow the instructions given to the 'master' detection module by the subject operating the control unit.

To install the radiation detector 1, a succession of operations are required, which can be easily performed by up to 2 people, such operations comprising:
- Positioning the support base 'B', removing any cover 8 from the chosen detection module 2;
- Positioning the support platform 15 above the support base 'B' and fastening it in position;
- Positioning and fastening a further detection module 2 at the support area 18 on the support platform 15;
- Using the flexible connection element 22 to connect the detection module 22 corresponding to support base 'B' to the first detection module 2 arranged on the support platform 15;
- Overlapping and fastening further detection modules 2 to define the self-supporting structure 'S', making the mechanical connection by means of coupling the structural connectors 8 and the electronic and/or information connection by means of the electronic connectors 12;
- Mutually fastening the detection modules 2 defining the self-supporting structure 'S' using the fastening means;
- Fastening and connecting the control unit 20 to an arbitrary detection module 2;
- Connecting the radiation detector 1 to the mains or alternatively to the electrical power supply unit 21 and the electrical power supply unit 21 to the mains;
- Starting the radiation detector 1.

To perform the detection, preferably the radiation detector 1 is provided with presence sensors which allow the system to know when a subject has stepped onto the walkable surface 16 in the main detection space 'K' and is ready to be scanned.

The radiation detector 1 will then automatically initiate a sequence of operations required for the detection, and the user will be guided by clear and brief voice messages at each step of the process.

Alternatively, the process can be initiated by voice commands or manual interactions with the control unit 20. Preferably, the detection of the presence of radiation occurs in several steps, in which the subject is asked to position different sides of the body at the detection array of the self-supporting structure 'S'.

The sequence of operations defining the radiation detection comprises the following operations:
- Automatic acquisition of ambient radiation background value;
- Playing a voice message to guide the subject to assume a specific position with respect to the radiation detector 1 (e.g., 'hold your palms forward');
- Verifying the correct position and sufficient proximity of the subject with respect to the detection portions 5 of the detection modules 2, otherwise playing a voice message indicating the necessary position correction to the subject (e.g., 'move closer');
- Playing a position-holding voice message to start the first step of the detection (e.g., 'stay still for X seconds', 'frontal acquisition starting in 3, 2, 1, now', 'frontal acquisition stopping in 3, 2, 1, now') and continuing for the preset measurement time;
- Detecting the presence of radiation along a first side of the subject;
- Playing a voice message instructing the subject to turn around (e.g., 'turn around');
- Repeating a proximity check;
- Playing a position-holding voice message to start the second step of the detection (e.g., 'stay still for X seconds', 'rear acquisition starting in 3, 2, 1, now', 'rear acquisition stopping in 3, 2, 1, now');
- Detecting the presence of radiation along a second side of the subject;
- End of the data acquisition and analysis;
- Producing a report of the results.

For each detection, the values acquired for each of the detection modules 2 will be processed individually and independently so as to detect contamination hotspots, if any, to then be merged into a complete detection during the data analysis and report production step.

Advantageously, the present invention achieves the proposed aims, overcoming the drawbacks complained of in the prior art, providing the user with a modular radiation detector which ensures flexible installation and easy portability, in which the subject can autonomously control the detection activation and management operations.

## Claims

1. Modular radiation detector (1), for performing a radiation detection on a subject, comprising a plurality of interchangeable detection modules (2), in use connectable to each other to perform an energy and/or information exchange, each detection module (2) of said plurality of detection modules (2) comprising an outer casing (3) and at least one sensor element (4) arranged inside said outer casing (3), each detection module (2) comprising a detection portion (5) at which said sensor elements (4) perform said detection;
wherein at least one subset of detection modules (2) of said plurality of detection modules (2) are configured, in a use configuration, to be reversibly assembled so as to define at least one self-supporting structure (S) extending substantially vertically with respect to a support plane (A) of said radiation detector (1); said self-supporting structure (S) defining a radiation detection array for said radiation detector (1).

2. Modular radiation detector (1) according to claim 1, wherein each outer casing (3) of a detection module (2) comprises a first connection facade (6a) and a second connection facade (6b), opposite each other, and wherein said detection portion (5) is defined between said first and second connection facades (6a, 6b), said first and second connection facades (6a, 6b) being configured to make a reversible connection between a detection module (2) and at least one further detection module (2).

3. Modular radiation detector (1) according to claim 2, wherein said first connection facade (6a) and said second connection facade (6b) comprise respective structural connectors (8) configured to make a reversible interlocking connection between respective detection modules (2).

4. Modular radiation detector (1) according to claim 2 or 3, wherein said first connection facade (6a) and said second connection facade (6b) comprise respective electronic connectors (12) configured to make an energy and/or information communication between respective detection modules (2), preferably said electronic connectors (12) are MIL-type connectors.

5. Modular radiation detector (1) according to one or more of the preceding claims, wherein said outer casing (3) has an opening defining said detection portion (5) and wherein said sensor elements (4) are facing said opening and configured to perform said detection through said opening.

6. Modular radiation detector (1) according to claim 5, wherein each detection module (2) comprises a protection grid (7) arranged or mounted to cover said opening.

7. Modular radiation detector (1) according to one or more of the preceding claims, wherein each sensor element (4) consists of scintillation detectors extending according to one and the same extension area of said detection portion (5).

8. Modular radiation detector (1) according to one or more of the preceding claims wherein said self-supporting structure (S) is defined by detection modules (2) having detection portions (5) of the sensor elements oriented towards a same main detection space.

9. Modular radiation detector (1) according to one or more of the preceding claims, wherein at least one detection module (2) of said plurality of detection modules (2) in use is configurable to define a detection base (B), wherein a first portion (14a) of said detection module (2) defines at least part of said support plane of said radiation detector (1) and a second portion (14b), opposite said first portion (14a), defines said detection portion (5).

10. Modular radiation detector (1) according to claim 9, comprising at least one support platform (15), provided with at least one walkable surface (16), in use overlapping with respect to said detection base (B).

11. Modular radiation detector (1) according to one or more of the preceding claims, wherein each detection module (2) of said plurality of detection modules (2) comprises gripping means (19) which in use can be grasped by a user, said gripping means (19) preferably being made in the form of folding handles arranged on the outer casing (3).

12. Modular radiation detector (1) according to one or more of the preceding claims, comprising a control unit (20) configured to control each detection module (2) of said plurality of detection modules (2).

13. Modular radiation detector (1) according to claim 12, wherein said control unit (20) is made in the form of a user interface unit reversibly connected, structurally and electronically, with at least one respective detection module (2) so as to be put in communication with each detection module (2) of said plurality of detection modules (2).

## Amended claims

### Amended claims in accordance with Rule 137(2) EPC.

1. Modular radiation detector (1), for performing a radiation detection on a subject, comprising a plurality of interchangeable detection modules (2), in use connectable to each other to perform an energy and/or information exchange, each detection module (2) of said plurality of detection modules (2) comprising an outer casing (3) and at least one sensor element (4) arranged inside said outer casing (3), each detection module (2) comprising a detection portion (5) at which said sensor elements (4) perform said detection; the outer casing (3) has an opening defining said detection portion (5) and wherein said sensor elements (4) are facing said opening and configured to perform said detection through said opening;
wherein at least one subset of detection modules (2) of said plurality of detection modules (2) are configured, in a use configuration, to be reversibly assembled so as to define at least one self-supporting structure (S) extending substantially vertically with respect to a support plane (A) of said radiation detector (1); said self-supporting structure (S) defining a radiation detection array for said radiation detector (1);
**characterized in that** each detection module (2) comprises a protection grid (7) arranged or mounted to cover said opening.

2. Modular radiation detector (1) according to claim 1, wherein each outer casing (3) of a detection module (2) comprises a first connection facade (6a) and a second connection facade (6b), opposite each other, and wherein said detection portion (5) is defined between said first and second connection facades (6a, 6b), said first and second connection facades (6a, 6b) being configured to make a reversible connection between a detection module (2) and at least one further detection module (2).

3. Modular radiation detector (1) according to claim 2, wherein said first connection facade (6a) and said second connection facade (6b) comprise respective structural connectors (8) configured to make a reversible interlocking connection between respective detection modules (2).

4. Modular radiation detector (1) according to claim 2 or 3, wherein said first connection facade (6a) and said second connection facade (6b) comprise respective electronic connectors (12) configured to make an energy and/or information communication between respective detection modules (2), preferably said electronic connectors (12) are MIL-type connectors.

5. Modular radiation detector (1) according to one or more of the preceding claims, wherein each sensor element (4) consists of scintillation detectors extending according to one and the same extension area of said detection portion (5).

6. Modular radiation detector (1) according to one or more of the preceding claims, wherein said self-supporting structure (S) is defined by detection modules (2) having detection portions (5) of the sensor elements oriented towards a same main detection space.

7. Modular radiation detector (1) according to one or more of the preceding claims, wherein at least one detection module (2) of said plurality of detection modules (2) in use is configurable to define a detection base (B), wherein a first portion (14a) of said detection module (2) defines at least part of said support plane of said radiation detector (1) and a second portion (14b), opposite said first portion (14a), defines said detection portion (5).

8. Modular radiation detector (1) according to claim 7, comprising at least one support platform (15), provided with at least one walkable surface (16), in use overlapping with respect to said detection base (B).

9. Modular radiation detector (1) according to one or more of the preceding claims, wherein each detection module (2) of said plurality of detection modules (2) comprises gripping means (19) which in use can be grasped by a user, said gripping means (19) preferably being made in the form of folding handles arranged on the outer casing (3).

10. Modular radiation detector (1) according to one or more of the preceding claims, comprising a control unit (20) configured to control each detection module (2) of said plurality of detection modules (2).

11. Modular radiation detector (1) according to claim 10, wherein said control unit (20) is made in the form of a user interface unit reversibly connected, structurally and electronically, with at least one respective detection module (2) so as to be put in communication with each detection module (2) of said plurality of detection modules (2).
